(19) Europäisches Patentamt
European Patent Office
Office européen des brevets

(11) **EP 3 468 027 B1**

(12) **EUROPEAN PATENT SPECIFICATION**

(45) Date of publication and mention
of the grant of the patent:
**27.01.2021 Bulletin 2021/04**

(51) Int Cl.:
*H02M 7/483* (2007.01)     *H02M 1/00* (2006.01)

(21) Application number: **18198176.2**

(22) Date of filing: **02.10.2018**

(54) **POWER CONVERSION DEVICE, CONTROL DEVICE AND CONTROL METHOD THEREOF, AND POWER GENERATION SYSTEM**

LEISTUNGSUMWANDLUNGSVORRICHTUNG, STEUERUNGSVORRICHTUNG UND STEUERUNGSVERFAHREN DAFÜR UND STROMERZEUGUNGSSYSTEM

DISPOSITIF DE CONVERSION DE PUISSANCE, DISPOSITIF DE COMMANDE ET SON PROCÉDÉ DE COMMANDE ET SYSTÈME DE GÉNÉRATION DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2017 JP 2017194207**

(43) Date of publication of application:
**10.04.2019 Bulletin 2019/15**

(73) Proprietor: **Hitachi, Ltd.**
**Tokyo 100-8280 (JP)**

(72) Inventors:
• **KAWAZOE, Hironari**
  **Tokyo, 100-8280 (JP)**
• **ITO, Tomomichi**
  **Tokyo, 100-8280 (JP)**
• **KIKUCHI, Akira**
  **Tokyo, 100-8280 (JP)**
• **WATANABE, Kenta**
  **Tokyo, 100-8280 (JP)**
• **TANAKA, Chikara**
  **Tokyo, 100-8280 (JP)**
• **KIYOFUJI, Yasuhiro**
  **Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
EP-A1- 2 560 275          EP-A1- 2 887 524
WO-A1-2017/038122     JP-A- 2016 197 940
JP-A- 2017 143 624

**Description**

BACKGROUND OF THE INVENTION

1. Field of the Invention

The present invention relates to a power conversion device including an arm to which a plurality of unit converters are connected, a so-called modular multi-level converter, a control device and a control method thereof, and a power generation system using the power conversion device.

2. Description of Related Art

In a first excitation (full converter) system which directly controls AC input and output of a rotating machine (generator or electric motor) with a power conversion device, the efficiency of the rotating machine is improved by variable speed drive control. As a result, $CO_2$ reduction and energy saving can be achieved. In addition, further improvement in efficiency can be expected by using a modular multi-level converter (hereinafter, referred to as MMC) having a small power conversion loss (for example, refer to JP-A-2015-12769) as the power conversion device.

In the MMC, arms each including single-phase converters connected in series (hereinafter, referred to as cells) and each having a capacitor are provided for three phases. Therefore, in order to output the desired AC voltage and DC voltage, the capacitor voltage is controlled such that the capacitor voltage between the cells and between the arms is balanced, and the average voltage of the capacitors of the whole three-phase arms is kept at a rated value (for example, refer to Investigating R&D Committee on New Voltage Source AC/DC Converters for Power Systems, "Technical Trends in New-Type Voltage Source AC/DC Converters for Power Systems: with Special Focuses on Modular Multilevel Converter (MMC)", technical report of the Institute of Electrical Engineers of Japan, The Institute of Electrical Engineers of Japan, Vol. 1374, Apr. 2016, pp. 13 to 15, and Japanese Patent No. 5993675).

In the MMC, in order to operate the rotating machine with high efficiency, it is necessary to control the AC power of the rotating machine according to the state of mechanical energy amount and rotational speed. However, in a MMC in the related art, since the AC current (active current) in the converter is controlled such that the average voltage of the capacitors of the whole three-phase arms is kept at a rated value, it is difficult to independently control the output of the rotating machine.

JP 2016 197940 A describes a power conversion system that includes a first power converter, a second power converter, a first control device, and a second control device.

EP 2 560 275 A1 describes a power converter that has a star-connected cascade multi-level converter (CMC) linked to a power supply system.

SUMMARY OF THE INVENTION

An object of the present invention is to provide a power conversion device and a corresponding control method capable of independently controlling AC power and a capacitor voltage.

This object is solved by the features of device claim 1 and method claim 11. The dependent claims recite advantageous embodiment of the invention.

According to the present invention, it is possible to independently control AC power and a capacitor voltage. Thus, it is possible to operate a rotary machine system and a power generation system with high efficiency.

The above-described problems, configurations, and effects will be more apparent from the description of the following embodiments.

BRIEF DESCRIPTION OF THE DRAWINGS

FIG. 1 illustrates an overall configuration of a power conversion device according to an embodiment of the present invention;
FIG. 2 illustrates an example of a circuit configuration of a cell in a circuit unit;
FIG. 3 illustrates an example of a circuit configuration of a cell in a main circuit unit;
FIG. 4 is a functional block diagram illustrating a configuration of a rotating machine target output value calculating unit;
FIG. 5 is a functional block diagram illustrating a configuration of an AC current control unit;
FIG. 6 is a functional block diagram illustrating a configuration of a capacitor average voltage control unit; and
FIG. 7 illustrates waveform examples of a three-phase AC voltage command values and a DC voltage command value.

DESCRIPTION OF EMBODIMENTS

Hereinafter, the embodiments of the present invention will be described with reference to the drawings. In each drawing, those with the same reference numerals indicate the same constituent requirements or constituent requirements having similar functions.

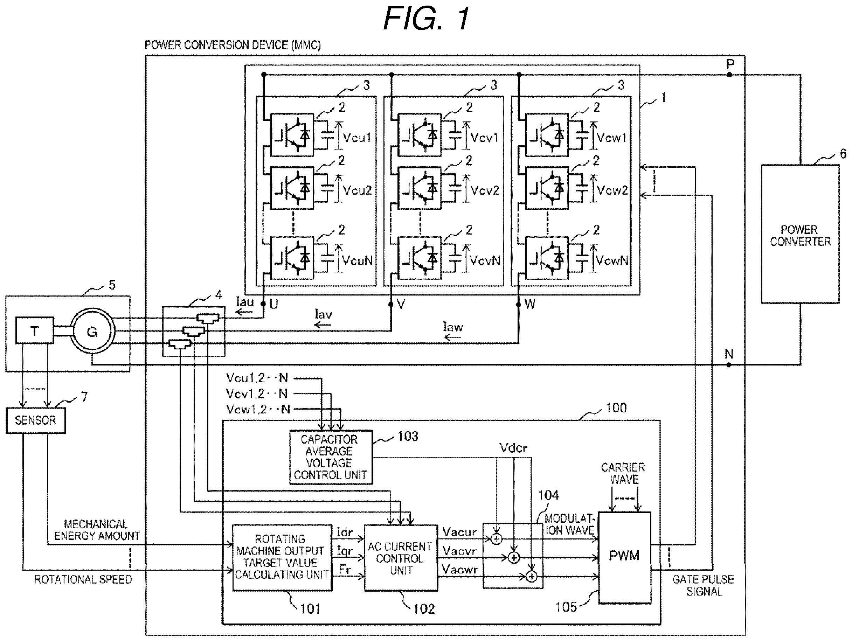

FIG. 1 illustrates an overall configuration of a power generation system including a power conversion device according to an embodiment of the present invention.

In a main circuit unit 1 of the power conversion device, arms 3 in which a plurality of cells 2, which are unit converters, are connected in series, are provided for number of phases of AC, in the embodiment, three phases (UVW) . That is, the power conversion device of the embodiment has a MMC configuration.

The cell 2 is constituted of a known chopper circuit or a full bridge circuit (for example, refer to JP-A-2015-12769 and Japanese Patent No. 5993675) including a capacitor serving as a DC voltage source. The output sides of the plurality of cells 2 are connected in series to constitute the arms 3. In the embodiment, an insulated gate bipolar transistor (IGBT) is used as a semiconductor switching element constituting the circuit of the cell 2.

Respective end portions of both end portions of each of the three-phase arms 3, that is, three arms 3, on the low potential side become connection points U, V, and W with stator windings of a rotating machine G in a rotating machine system 5. These connection points are electrically connected to three-phase AC terminals of the stator windings of the rotating machine G via a current sensor 4. In addition, respective end portions of both end portions of each of the three-phase arms 3 on the high potential side are commonly connected and become a neutral point of the three-phase arms 3. That is, the three-phase arms 3 are Y-connected (or star-connected) on these high potential sides, and the neutral point of the Y connection is drawn.

The neutral point of the three-phase arms 3 and the neutral point of the stator winding to be Y-connected of the rotating machine (or star-connected) are respectively connected to a high potential side connection point P and a low potential side connection point N of the DC line. The DC line is connected to the DC side of a power converter 6 for system interconnection. The AC side of the power converter 6 is connected to a commercial AC power system (not shown). Accordingly, the main circuit unit 1 of the MMC is connected to a main circuit unit (not shown) of the power converter 6 and power is exchanged between both main circuit units.

In this embodiment, the neutral point of the Y-connected stator winding is drawn, but in place of this, a well-known neutral point drawing reactor (for example, refer to JP-A-2015-12769) may be connected to the connection points U, V, and W, and the neutral point of the neutral point extraction reactor may be drawn and connected to the low potential side connection point N. In this case, the stator windings may be delta-connected.

In addition, the circuit configuration of the main circuit unit of the MMC may adopt a known double star MMC method (for example, refers to page 19 of Investigating R&D Committee on New Voltage Source AC/DC Converters for Power Systems, "Technical Trends in New-Type Voltage Source AC/DC Converters for Power Systems: with Special Focuses on Modular Multilevel Converter (MMC)", technical report of the Institute of Electrical Engineers of Japan, The Institute of Electrical Engineers of Japan, Vol. 1374, Apr. 2016, pp. 13 to 15). This double star MMC method has six arms 3 in Fig. 1, and six arms 3 are connected in a three-phase full bridge configuration.

In the embodiment, the rotating machine G in the rotating machine system 5 is a power generator for hydroelectric power generation. A water turbine T is mechanically connected to this power generator. When the water turbine T receives the water flow and rotates, the rotating machine G, that is, the power generator converts the mechanical energy of the water turbine to three-phase AC power and outputs the power from the stator winding. The electric power output from the power generator is supplied to the power system as three-phase AC with a constant voltage at a constant frequency via the power conversion device of the MMC method and the system interconnection power converter 6. In the embodiment, the power generation output is directly controlled by the power conversion device equipped with the main circuit unit 1 of the MMC method. Thus, the power generator can be operated at variable speed with high efficiency.

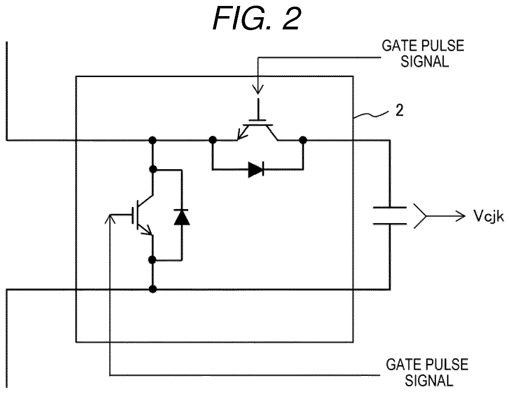

FIG. 2 shows an example of a circuit configuration of the cell 2 in the main circuit unit 1. In the example, the cell 2 is constituted of a chopper circuit. In this chopper circuit, the DC voltage of the capacitor is inputted and the output voltage is controlled by on/off driving of the semiconductor switching element (IGBT in FIG. 2). The semiconductor switching element is turned on and off by a drive signal (gate pulse signal in FIG. 2) to be applied to a control terminal (the gate terminal of the IGBT in FIG. 2). A detected value $Vcjk$ (j = u, v, w; k = 1, ..., N) of the DC voltage of both ends of the capacitor in each cell 2 is inputted to a capacitor average voltage control unit 103 which is to be described hereinafter (FIG. 1).

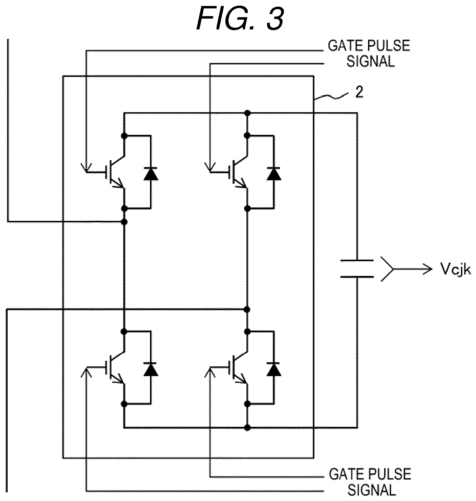

FIG. 3 shows an example of a circuit configuration of the cell 2 in the main circuit unit 1. In the example, the cell 2 is constituted by a single-phase full bridge circuit. In this single-phase full bridge circuit, the DC voltage of the capacitor is inputted and the output voltage is controlled by on/off driving of the semiconductor switching element (IGBT in FIG. 3). As shown in the example of FIG. 2, the semiconductor switching element is turned on and off by a driving signal (gate pulse signal) to be applied to the control terminal. In addition, as in the example of FIG. 2, the detected value Vcjk of the DC voltage across the capacitor in each cell 2 is inputted to the capacitor average voltage control unit 103 (FIG. 1).

The semiconductor switching element (IGBT) indicated by one circuit symbol in FIG. 2 and FIG. 3 may be constituted by series-parallel connection of a plurality of semiconductor chips. Further, such the plurality of semiconductor chips may be accommodated in one package or case.

Next, a control device 100 (FIG. 1) will be described. In the embodiment, an arithmetic processing device such as a microcomputer operates as each functional unit of the control device 100, described hereinafter, by executing predetermined program. In the control device 100, a so-called vector control method is used.

A rotating machine target output value calculating unit 101 calculates and outputs the current command values (Idr and Iqr) to be given to an AC current control unit 102 and a frequency command value Fr using the amount of mechanical energy and the rotational speed of the rotating machine system 5 detected by the sensor 7 (in FIG. 1, the rotation speed of the water turbine T) as an input. Here, in the embodiment, the amount of mechanical energy is the flow rate [m$^3$/s] and the head difference [m] to be used for hydroelectric power generation.

The AC current control unit 102 calculates and outputs three-phase voltage command values Vacur, Vacvr, and Vacwr to control the AC current contained in a U-phase arm current Iau, a V-phase arm current Iav, and a W-phase arm current Iaw detected by the current sensor 4 according to the command values (Idr, Iqr, and Fr) from the rotating machine target output value calculating unit 101.

The capacitor average voltage control unit 103 makes an operator symbol of the detected value of the capacitor voltage of each cell 2 (Vcjk in FIGS. 2 and 3), that is, the average voltage value of voltages Vcu1, Vcu2, ..., VcuN of N cells of the U-phase arm, voltages Vcv1, Vcv2, ..., VcvN of N cells of the V-phase arm, and voltages Vcw1, Vcw2, ..., VcwN of N cells of the W-phase arm; and calculates and outputs a DC voltage command value Vdcr to control the calculated average voltage to be a predetermined voltage value, for example, a capacitor rated voltage value. Here, the average voltage value is, for example, an arithmetic mean value (= (Vcu1 + ... + VcuN + Vcv1 + ... + VcvN + Vcw1 + ... + VcwN)/3N).

In the embodiment, the average value of the capacitor voltages of all the cells (N per arm and a total of 3N) constituting the main circuit unit 1 is calculated. However, there is no limitation thereto, the plurality of cells whose total number is smaller may be selected, and the average value of the capacitor voltages of these cells may be calculated. In the embodiment, the average value of the capacitor voltages of the cells is controlled to a predetermined value, and this control is a collective control of capacitor voltages of the plurality of cells constituting the main circuit unit 1.

The adder 104 adds the DC voltage command value Vdcr to each of the three-phase AC voltage command values Vacur, Vacvr, and Vacwr, and generates a voltage command to be given to the PWM control unit 105, that is, a modulation wave.

The control unit 105 generates and outputs the drive signal for driving each cell 2 constituting the main circuit unit 1 of the MMC-the gate pulse signal of the IGBT of each cell in the embodiment-from the carrier wave and the modulated wave generated by the adder 104, so-called pulse width modulation (PWM).

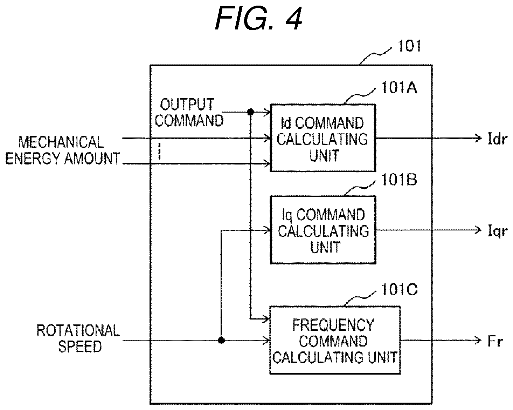

FIG. 4 is a functional block diagram illustrating a configuration of the rotating machine target output value calculating unit 101 in FIG. 1.

As shown in FIG. 4, an Id command calculating unit 101A calculates a d axis current command Idr based on the output command and the amount of mechanical energy (flow rate and head) . In the embodiment, the output command is, for example, an active power command value for the rotating machine G (powder generator) . In addition, the Iq command calculating unit 101 calculates a q axis current command Iqr according to the rotational speed of the water turbine T or the rotating machine G. Here, the terms "d axis" and "q axis" are coordinate axes of rotation coordinates used in known vector control.

If the rotating machine G is an induction generator, until the rotational speed reaches the rated value, the q axis current command Iqr is set to a predetermined constant value, and in a region where the rotation speed exceeds the rated value, the q axis current command Iqr is calculated to reduce the q axis current command Iqr according to the rotational speed.

If the rotating machine G is a synchronous generator, the q axis current command Iqr is set to zero. That is, the output of the power generator is set to power factor 1. However, for example, when adjusting power factor, the q axis current command Iqr may be calculated so that the weak field current flows.

A frequency command calculating unit 101C in FIG. 4 calculates and outputs the frequency command value Fr to the power conversion device (MMC) based on the output command and the rotational speed of the water turbine T or the rotating machine G.

If the rotating machine G is an induction generator, a slip angle frequency is calculated from the output command (the slip takes a negative value in the power generation operation area of the induction machine), and a synchronization frequency, that is, the frequency command value Fr is calculated from the calculated slip angle frequency and the rotational speed.

If the rotating machine G is a synchronous generator, the frequency command value Fr is calculated based on the rotational speed.

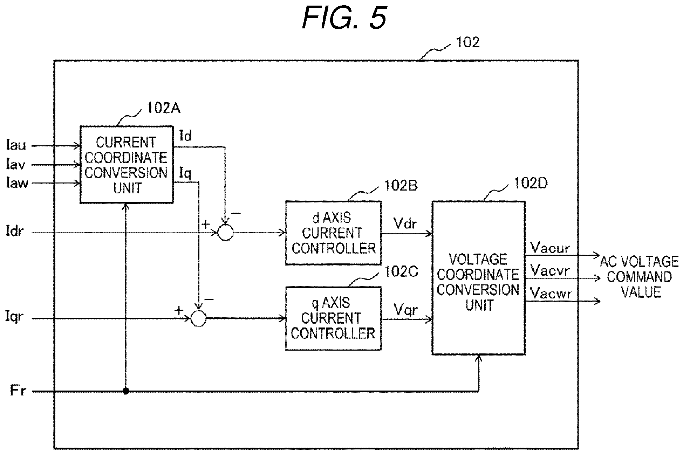

FIG. 5 is a functional block diagram illustrating a configuration of the AC current control unit 102 in FIG. 1.

As shown in FIG. 5, a current coordinate conversion unit 102A performs three-phase or two-phase conversion on the arm currents Iau, Iav, and Iaw into in the stationary coordinate system using Equation (1) and further converts the obtained values into a d axis current Id (active current) and a q axis current Iq (reactive current) in the rotating coordinate system using Equation (2). In Equations (1) and (2), Iα and Iβ represent current components subjected to three-phase or two-phase conversion, Fr represents a frequency command value, and t represents time.

$$\begin{bmatrix} I\alpha \\ I\beta \end{bmatrix} = \sqrt{\frac{2}{3}} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} Iau \\ Iav \\ Iaw \end{bmatrix} \quad \cdots \quad (1)$$

$$\begin{bmatrix} Id \\ Iq \end{bmatrix} = \begin{bmatrix} \cos(2\pi \times Fr \times t) & \sin(2\pi \times Fr \times t) \\ -\sin(2\pi \times Fr \times t) & \cos(2\pi \times Fr \times t) \end{bmatrix} \begin{bmatrix} I\alpha \\ I\beta \end{bmatrix} \quad \cdots \quad (2)$$

The d axis current controller 102B calculates a d axis voltage command Vdr according to a difference between Idr and Id so that the d axis current Id is matched with the d axis current command Idr. In addition, the q axis current controller 102C calculates a q axis voltage command Vqr according to a difference between Iqr and Iq so that the q axis current Iq is matched with the q axis current command Iqr.

A voltage coordinate conversion unit 102D converts the d axis voltage command Vdr and the q axis voltage command Vqr respectively calculated by the d axis current controller 102B and the q axis current controller 102C from the rotating coordinate system to the stationary coordinate system using Equation (3) and further converts the values into three-phase AC current voltage values Vacur, Vacvr, and Vacwr by two-phase or three-phase conversion in the stationary coordinate system. In Equations (3) and (4), Vαr and Vβr represent voltage command values subjected to two-phase or three-phase conversion in the stationary coordinate system, Fr represents a frequency command value, and t represents time.

$$\begin{bmatrix} V\alpha r \\ V\beta r \end{bmatrix} = \begin{bmatrix} \cos(2\pi \times Fn \times t) & -\sin(2\pi \times Fn \times t) \\ \sin(2\pi \times Fn \times t) & \cos(2\pi \times Fn \times t) \end{bmatrix} \begin{bmatrix} Vdr \\ Vqr \end{bmatrix} \quad \cdots \quad (3)$$

$$\begin{bmatrix} Vacur \\ Vacvr \\ Vacwr \end{bmatrix} = \sqrt{\frac{2}{3}} \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix} \begin{bmatrix} V\alpha r \\ V\beta r \end{bmatrix} \quad \cdots \quad (4)$$

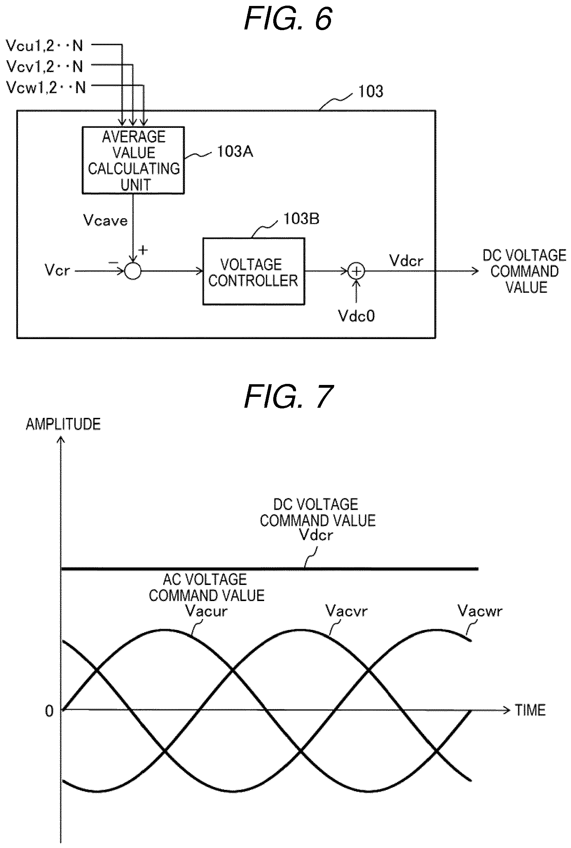

FIG. 6 is a functional block diagram illustrating a configuration of the capacitor average voltage control unit 103 in FIG. 1.

As shown in Fig. 6, an average value calculating unit 103A calculates the average voltage Vcave of the capacitors in the three-phase arms, that is, the whole main circuit unit 1 from the capacitor voltages Vcu1, ..., VcuN, Vcv1, ..., VcvN, Vcw1, ..., VcwN of each cell 2.

The voltage controller 103B generates an operation amount (voltage variation amount, that is, increment or decrement) of the DC voltage of the DC line (the DC current between P and N in FIG. 1) according to a difference between Vcave and Vcr so that the average voltage Vcave calculated by the average value calculating unit 103A is matched with the voltage command Vcr. A DC voltage rated value Vdc0 (fixed value) of the DC line (between P and N) is added to the generated operation amount and a DC voltage command value Vdcr is generated.

FIG. 7 shows waveform examples of three-phase AC voltage command values Vacur, Vacvr, and Vacwr and a DC voltage command value Vdcr.

FIG. 7 shows the waveforms of the three-phase AC voltage command values Vacur, Vacvr, Vacwr and the DC voltage command value Vdcr individually, but a modulated wave of the waveform in which these waveforms are superimposed is inputted to the PWM control unit 105 (FIG. 1) . Accordingly, depending on the amplitude, phase, and frequency of the AC component of the modulated wave, that is, the three-phase AC voltage command value (Vacur, Vacvr, and Vacwr), a desired AC output is obtained from the rotating machine G (power generator) and the average voltage of the capacitor voltages of the main circuit unit, that is, the whole three-phase arms, is controlled to be the rated value by the DC component of the modulated wave, that is, the amplitude of the DC voltage command value Vdcr.

As described above, in the embodiment, the DC voltage command value generated from the detected value of the capacitor voltage is added to the three-phase AC current value and a voltage command to the PWM control unit, that is, a modulated wave is generated. Thus, it is possible to independently control the AC output and the capacitor voltage. Accordingly, the AC output of the power generator, that is, the AC input and the capacitor voltage to the power conversion device (MMC) can be controlled with high accuracy. Thus, the operational efficiency of the rotating machine and the power generation system is improved.

It should be noted that the present invention is not limited to the above-described embodiment, but includes various modified examples. For example, the above-described embodiment has been described in detail in order to explain the present invention in an easy-to-understand manner, and is not necessarily limited to those having all the configurations described. Further, it is possible to add, delete, or replace other components with respect to part of the configuration of the embodiment.

The power conversion device (MMC) in the embodiment is not limited to the variable speed hydroelectric power generation system (Fig. 1) in which the rotating machine is dedicated to power generation, but can also be applied to a variable speed pumping-up power generation system using the rotating machine as a power generator motor. In this case, the AC side of the MMC is connected to a rotor winding and the MMC is used as an AC exciting device.

In addition, the power conversion device (MMC) in the embodiment is not limited to a hydroelectric power generation system, and may also be applied to a wind power generation system or a solar power generation system. In the wind power generation system, in FIG. 1, "mechanical energy amount" corresponds to "wind speed [m/s]".

Further, in the embodiment, the power conversion device (MMC) may be used as an inverter for driving an AC motor. In this case, the output command in FIG. 2 is an electric torque command value.

The rotating machine may be either an induction machine or a synchronous machine. If the rotating machine is an induction motor, Fr in FIG. 2 is calculated by subtracting the slip. If the rotating machine is a synchronous motor, a frequency command value Fr is calculated based on the rotational speed.

In addition, in the embodiment, the capacitor voltage may be controlled by using collective control of all capacitor voltages and known "arm balance control" or "individual balance control" (for example, refer to Investigating R&D Committee on New Voltage Source AC/DC Converters for Power Systems, "Technical Trends in New-Type Voltage Source AC/DC Converters for Power Systems: with Special Focuses on Modular Multilevel Converter (MMC)", technical report of the Institute of Electrical Engineers of Japan, The Institute of Electrical Engineers of Japan, Vol. 1374, Apr. 2016, pp. 13 to 15).

## Claims

1.  A power conversion device comprising:

    - a main circuit unit (1) including
    - a plurality of arms (3) to which outputs of a plurality of converters (2) are connected in series, each of the plurality of converters (2) being adapted to include a plurality of semiconductor switching elements and a capacitor and being configured to receive a DC voltage of the capacitor and to control an output voltage by on/off driving of the semiconductor switching elements, and the main circuit unit (1) including an AC side connectable to a target (5) to be controlled;

        - a driving unit (105) configured to receive a voltage command, to generate a driving signal for driving the plurality of semiconductor switching elements in the main circuit unit (1) according to the voltage command, and to output the driving signal to the plurality of semiconductor switching elements;
        - an AC control unit (102) configured to generate AC voltage commands (Vacur, Vacvr, Vacwr) for the number of phases on the AC side for controlling AC power of the target to be controlled; and
        - a DC control unit (103) configured to generate a DC voltage command (Vdcr) for setting an average value of the DC voltages (Vcjk) of the capacitors of each of the plurality of converters (2) in the main circuit unit (1) to a predetermined value, based at least on detected capacitor DC voltages (Vcjk) of each of the plurality of converters (2) and a DC voltage rated value (VdcO) of a DC line to which the arms (3) are connected;
- an adder (104) configured to add the DC voltage command (Vdcr) generated by the DC control unit (103) to the AC voltage commands (Vacur, Vacvr, Vacwr) generated by the AC control unit (102), to generate a voltage command comprising a modulation wave, and to provide the voltage command to the driving unit (105).

2. The power conversion device according to claim 1, wherein
the driving unit (105) is configured to generate the driving signal by pulse width modulation using the voltage command as a carrier wave.

3. The power conversion device according to claim 1, wherein
the AC control unit (102) is configured to generate the AC voltage commands based on a detected value of an AC current flowing to the AC side and current command values.

4. The power conversion device according to claim 3, wherein
the current command values are a d axis current command value and a q axis current command value in a rotating coordinate system; and
the AC control unit (102) is configured to convert the detected values of the AC current into a d axis current and a q axis current in the rotating coordinate system, and to generate the AC voltage commands in response to a difference between the d axis current command value and the d axis current and a difference between the q axis current command value and the q axis current.

5. The power conversion device according to claim 3 or 4, wherein
a rotating machine target output value calculating unit (101) is configured to generate the current command values based on an operation state of the target (5) to be controlled.

6. The power conversion device according to claim 1, wherein
the DC control unit (103) is configured to calculate the average value of the DC voltage of the plurality of capacitors in the main circuit unit (1) and to generate the DC voltage command in response to a difference between the calculated average value and a capacitor voltage command value that gives the predetermined value.

7. The power conversion device according to claim 6, wherein
the capacitor voltage command value is a capacitor voltage rated value.

8. The power conversion device according to claim 6, wherein
the DC control unit (103) is configured to generate the DC voltage command by obtaining a variation amount in a DC voltage of a DC line according to the difference between the average value and the capacitor voltage command value and adding a DC voltage rated value of the DC line to the variation amount to.

9. The power conversion device according to claim 1, wherein
the converter is constituted by a chopper circuit or a single-phase full bridge circuit.

10. The power conversion device according to claim 1, wherein
the target (5) to be controlled is a rotating machine.

11. A control method of a power conversion device including a main circuit unit (1) having a plurality of arms (3) to which outputs of a plurality of converters (2) are connected in series, each of the plurality of converters (2) being adapted to include a plurality of semiconductor switching elements and a capacitor and being configured to receive a DC voltage (Vcjk) of the capacitor and to control an output voltage by on/off driving of the semiconductor switching elements, and the main circuit unit (1) including an AC side connected to a target (5) to be controlled, the method comprising:

generating AC voltage commands (Vacur, Vacvr, Vacwr) for the number of phases on the AC side for controlling AC power of the target (5) to be controlled;
generating a DC voltage command (Vdcr) for setting an average value of the DC voltages (Vcjk) of the capacitors of each of the plurality of converters (2) in the main circuit unit (1) to a predetermined value, based at least on detected capacitor DC voltages (Vcjk) of each of the plurality of converters (2) and a DC voltage rated value (VdcO) of a DC line to which the arms (3) are connected; and
generating a driving signal comprising a modulation wave for driving the plurality of the semiconductor switching elements in the main circuit unit (1) by adding the DC voltage command (Vdcr) to the AC voltage commands (Vacur, Vacvr, Vacwr).

**Patentansprüche**

1. Leistungsumsetzungsvorrichtung, die Folgendes umfasst:

- eine Hauptschaltungseinheit (1), die Folgendes enthält:
- mehrere Zweige (3), mit denen Ausgänge mehrerer Umsetzer (2) in Reihe geschaltet sind, wobei die mehreren Umsetzer (2) so beschaffen sind, dass sie mehrere Halbleiterschaltelemente und einen Kondensator enthalten, und konfiguriert sind, eine Gleichspannung des Kondensators zu empfangen und eine Ausgangsspannung durch eine Einschalt-/Ausschalt-Ansteuerung der Halbleiterschaltelemente zu steuern, wobei die Hauptschaltungseinheit (1) eine Wechselspannungsseite besitzt, die mit einem zu steuernden Ziel (5) verbunden werden kann;
- eine Ansteuereinheit (105), die konfiguriert ist, einen Spannungsbefehl zu empfangen, ein Ansteuersignal zum Ansteuern der mehreren Halbleiterschaltelemente in der Hauptschaltungseinheit (1) in Übereinstimmung mit dem Spannungsbefehl zu erzeugen und das Ansteuersignal an die mehreren Halbleiterschaltelemente auszugeben;
- eine Wechselspannungssteuereinheit (102), die konfiguriert ist, Wechselspannungsbefehle (Vacur, Vacvr, Vacwr) für die Anzahl von Phasen auf der Wechselspannungsseite zu erzeugen, um die Wechselspannungsleistung des zu steuernden Ziels zu steuern; und
- eine Gleichspannungssteuereinheit (103), die konfiguriert ist, einen Gleichspannungsbefehl (Vdcr) zum Einstellen eines Durchschnittswertes der Gleichspannungen (Vcjk) der Kondensatoren jedes der mehreren Umsetzer (2) in der Hauptschaltungseinheit (1) auf einen vorgegebenen Wert wenigstens anhand detektierter Kondensatorgleichspannungen (Vcjk) jedes der mehreren Umsetzer (2) und eines Gleichspannungsnennwertes (VdcO) einer Gleichspannungsleitung, mit der die Zweige (3) verbunden sind, zu erzeugen;
- einen Addierer (104), der konfiguriert ist, den durch die Gleichspannungssteuereinheit (103) erzeugten Gleichspannungsbefehl (Vdcr) zu den durch die Wechselspannungssteuereinheit (102) erzeugten Wechselspannungsbefehlen (Vacur, Vacvr, Vacwr) zu addieren, um einen Spannungsbefehl zu erzeugen, der eine Modulationswelle enthält, und um den Spannungsbefehl für die Ansteuereinheit (105) bereitzustellen.

2. Leistungsumsetzungsvorrichtung nach Anspruch 1, wobei
die Ansteuereinheit (105) konfiguriert ist, das Ansteuersignal durch Pulsbreitenmodulation unter Verwendung des Spannungsbefehls als Trägerwelle zu erzeugen.

3. Leistungsumsetzungsvorrichtung nach Anspruch 1, wobei
die Wechselspannungssteuereinheit (102) konfiguriert ist, die Wechselspannungsbefehle anhand eines detektierten Wertes eines Wechselstroms, der zu der Wechselspannungsseite fließt, und von Strombefehlswerten zu erzeugen.

4. Leistungsumsetzungsvorrichtung nach Anspruch 3, wobei
die Strombefehlswerte ein d-Achsen-Strombefehlswert und ein q-Achsen-Strombefehlswert in einem rotierenden Koordinatensystem sind; und
die Wechselspannungssteuereinheit (102) konfiguriert ist, die detektierten Werte des Wechselstroms in einen d-Achsen-Strom und einen q-Achsen-Strom in dem rotierenden Koordinatensystem umzusetzen und die Wechselspannungsbefehle in Reaktion auf eine Differenz zwischen dem d-Achsen-Strombefehlswert und dem d-Achsen-Strom und auf eine Differenz zwischen dem q-Achsen-Strombefehlswert und dem q-Achsen-Strom zu erzeugen.

5. Leistungsumsetzungsvorrichtung nach Anspruch 3 oder 4, wobei
eine Einheit (101) zum Berechnen eines Ziel-Ausgangswertes einer rotierenden Maschine konfiguriert ist, die Strombefehlswerte anhand eines Betriebszustands des zu steuernden Ziels (5) zu erzeugen.

6. Leistungsumsetzungsvorrichtung nach Anspruch 1, wobei
die Gleichspannungssteuereinheit (103) konfiguriert ist, den Durchschnittswert der Gleichspannung der mehreren Kondensatoren in der Hauptschaltungseinheit (1) zu berechnen und den Gleichspannungsbefehl in Reaktion auf eine Differenz zwischen dem berechneten Durchschnittswert und einem Kondensatorspannungs-Befehlswert, der den vorgegebenen Wert ergibt, zu erzeugen.

7. Leistungsumsetzungsvorrichtung nach Anspruch 6, wobei
der Kondensatorspannungs-Befehlswert ein Kondensatorspannungs-Nennwert ist.

8. Leistungsumsetzungsvorrichtung nach Anspruch 6, wobei
die Gleichspannungssteuereinheit (103) konfiguriert ist, den Gleichspannungsbefehl durch Erhalten eines Änderungsbetrags einer Gleichspannung in einer Gleichspannungsleitung in Übereinstimmung mit der Differenz zwischen dem Durchschnittswert und dem Kondensatorspannungs-Befehlswert und durch Addieren eines Gleichspannungs-Nennwertes der Gleichspannungsleitung zu dem Änderungsbetrag zu erzeugen.

9. Leistungsumsetzungsvorrichtung nach Anspruch 1, wobei
der Umsetzer durch eine Zerhackerschaltung oder eine Einzelphasen-Vollbrückenschaltung gebildet ist.

10. Leistungsumsetzungsvorrichtung nach Anspruch 1, wobei das zu steuernde Ziel (5) eine rotierende Maschine ist.

11. Verfahren zum Steuern einer Leistungsumsetzungsvorrichtung, die eine Hauptschaltungseinheit (1) mit mehreren Zweigen (3), mit denen Ausgänge mehrerer Umsetzer (2) in Reihe geschaltet sind, enthält, wobei jeder der mehreren Umsetzer (2) dafür ausgelegt ist, mehrere Halbleiterschaltelemente und einen Kondensator zu enthalten, und konfiguriert ist, eine Gleichspannung (Vcjk) des Kondensators zu empfangen und eine Ausgangsspannung durch Einschalt-/Ausschalt-Ansteuern der Halbleiterschaltelemente zu steuern, wobei die Hauptschaltungseinheit (1) eine Wechselspannungsseite enthält, die mit einem zu steuernden Ziel (5) verbunden ist, wobei das Verfahren Folgendes umfasst:

Erzeugen von Wechselspannungsbefehlen (Vacur, Vacvr, Vacwr) für die Anzahl von Phasen auf der Wechselspannungsseite, um die Wechselspannungsleistung des zu steuernden Ziels (5) zu steuern;
Erzeugen eines Gleichspannungsbefehls (Vdcr) zum Einstellen eines Durchschnittswertes der Gleichspannungen (Vcjk) der Kondensatoren jedes der mehreren Umsetzer (2) in der Hauptschaltungseinheit (1) auf einen vorgegebenen Wert wenigstens anhand detektierter Kondensatorgleichspannungen (Vcjk) jedes der mehreren Umsetzer (2) und eines Gleichspannungs-Nennwertes (VdcO) einer Gleichspannungsleitung, mit der die Zweige (3) verbunden sind; und
Erzeugen eines Ansteuersignals, das eine Modulationswelle zum Ansteuern der mehreren Halbleiterschaltelemente in der Hauptschaltungseinheit (1) enthält, durch Addieren des Gleichspannungsbefehls (Vdcr) zu den Wechselspannungsbefehlen (Vacur, Vacvr, Vacwr).

## Revendications

1. Dispositif de conversion de puissance comprenant :

- une unité formant circuit principal (1) incluant
- une pluralité de branches (3) aux sorties desquelles une pluralité de convertisseurs (2) sont connectés en série, chacun de la pluralité de convertisseurs (2) étant adapté pour inclure une pluralité d'éléments de commutation à semi-conducteur et un condensateur, et étant configuré pour recevoir une tension CC du condensateur et pour commander une tension de sortie par pilotage en tout ou rien des éléments de commutation à semi-conducteur, et l'unité formant circuit principal (1) incluant un côté CA susceptible d'être connecté à une cible (5) qu'il s'agit de commander ;
- une unité de pilotage (105) configurée pour recevoir un ordre de tension, pour générer un signal de pilotage afin de piloter la pluralité d'éléments de commutation à semi-conducteur dans l'unité formant circuit principal (1) en accord avec l'ordre de tension, et pour sortir le signal de pilotage vers la pluralité d'éléments de commutation à semi-conducteur ;
- une unité de commande CA (102) configurée pour générer des ordres de tension CA (Vacur, Vacvr, Vacwr) pour le nombre de phases sur le côté CA afin de commander la puissance CA de la cible qu'il s'agit de commander ; et
- une unité de commande CC (103) configurée pour générer un ordre de tension CC (Vdcr) afin d'établir une valeur moyenne des tensions CC (Vcjk) des condensateurs de chacun de la pluralité de convertisseurs (2) dans l'unité formant circuit principal (1) à une valeur prédéterminée, sur la base au moins des tensions CC (Vcjk) des condensateurs détectées de chacun de la pluralité de convertisseurs (2) et une valeur nominale de tension CC (VdcO) d'une ligne CC à laquelle les branches (3) sont connectées ;
- une unité d'addition (104) configurée pour additionner l'ordre de tension CC (Vdcr) généré par l'unité de commande CC (103) aux ordres de tension CA (Vacur, Vacvr, Vacwr) générés par l'unité de commande CA (102), pour générer un ordre de tension comprenant une onde de modulation, et pour fournir l'ordre de tension à l'unité de pilotage (105).

2. Dispositif de conversion de puissance selon la revendication 1, dans lequel l'unité de pilotage (105) est configurée pour générer le signal de pilotage par modulation de largeur d'impulsion en utilisant l'ordre de tension à titre d'onde porteuse.

3. Dispositif de conversion de puissance selon la revendication 1, dans lequel l'unité de commande CA (102) est configuré pour générer les ordres de tension CA sur la base d'une valeur détectée d'un courant CA qui s'écoule vers le côté CA et des valeurs d'ordre de courant.

4. Dispositif de conversion de puissance selon la revendication 3, dans lequel les valeurs d'ordre de courant sont une valeur d'ordre de courant d'axe d et une valeur d'ordre de courant d'axe q dans un système de coordonnées polaires ; et

   l'unité de commande CA (102) est configurée pour convertir les valeurs détectées du courant CA en un courant d'axe d et en un courant d'axe q dans le système de coordonnées polaires, et pour générer les ordres de tension CA en réponse à une différence entre la valeur d'ordre de courant d'axe d et le courant d'axe d, et à une différence entre la valeur d'ordre de courant d'axe q et le courant d'axe q.

5. Dispositif de conversion de puissance selon la revendication 3 ou 4, dans lequel
   une unité de calcul de valeur de sortie cible pour machine rotative (101) est configurée pour générer les valeurs d'ordre de courant sur la base d'un état de fonctionnement de la cible (5) qu'il s'agit de commander

6. Dispositif de conversion de puissance selon la revendication 1, dans lequel l'unité de commande CC (103) est configurée pour calculer la valeur moyenne de la tension CC de la pluralité de condensateurs dans l'unité formant circuit principal (1) et pour générer l'ordre de tension CC en réponse à une différence entre la valeur moyenne calculée et une valeur d'ordre de tension de condensateur qui donne la valeur prédéterminée.

7. Dispositif de conversion de puissance selon la revendication 6, dans lequel la valeur d'ordre de tension de condensateur est une valeur nominale de tension de condensateur.

8. Dispositif de conversion de puissance selon la revendication 6, dans lequel l'unité de commande CC (103) est configurée pour générer l'ordre de tension CC en obtenant une quantité de variation dans une tension CC d'une ligne CC en accord avec la différence entre la valeur moyenne et la valeur d'ordre de tension de condensateur et en ajoutant une valeur nominale de tension CC de la ligne CC à la quantité de variation.

9. Dispositif de conversion de puissance selon la revendication 1, dans lequel le convertisseur est constitué par un circuit hacheur ou un circuit en pont total monophasé.

10. Dispositif de conversion de puissance selon la revendication 1, dans lequel
    la cible (5) qu'il s'agit de commander est une machine rotative.

11. Procédé de commande d'un dispositif de de conversion de puissance incluant une unité formant circuit principal (1) ayant une pluralité de branches (3) aux sorties desquelles une pluralité de convertisseurs (2) sont connectés en série, chacun de la pluralité de convertisseurs (2) étant adapté pour inclure une pluralité d'éléments de commutation à semi-conducteur et un condensateur, et étant configuré pour recevoir une tension CC (Vcjk) du condensateur et pour commander une tension de sortie par pilotage en tout ou rien des éléments de commutation à semi-conducteur, et l'unité formant circuit principal (1) ayant un côté CA connecté à une cible (5) qu'il s'agit de commander, le procédé comprenant les étapes consistant à :

   générer des ordres de tension CA (Vacur, Vacvr, Vacwr) pour le nombre de phases sur le côté CA afin de commander une puissance CA de la cible (5) qu'il s'agit de commander ;
   générer un ordre de tension CC (Vdcr) pour fixer une valeur moyenne d'tension CC (Vcjk) des condensateurs de chacun de la pluralité de convertisseurs (2) dans l'unité formant circuit principal (1) à une valeur prédéterminée, sur la base au moins des tensions CC des condensateurs détectés (Vcjk) de chacun de la pluralité de convertisseurs (2) et d'une valeur nominale de tension CC (VdcO) d'une ligne CC à laquelle les branches (3) sont connectées ; et

générer un signal de pilotage comprenant une onde de modulation pour piloter la pluralité d'éléments de commutation à semi-conducteur dans l'unité formant circuit principal (1) par addition de l'ordre de tension CC (Vdcr) aux ordres de tension CA (Vacur, Vacvr, Vacwr).

FIG. 1

## FIG. 2

GATE PULSE
SIGNAL

2

Vcjk

GATE PULSE
SIGNAL

# FIG. 3

GATE PULSE
SIGNAL

2

Vcjk

GATE PULSE
SIGNAL

# FIG. 4

OUTPUT
COMMAND

MECHANICAL
ENERGY AMOUNT

ROTATIONAL
SPEED

101

101A

Id COMMAND
CALCULATING
UNIT

→ Idr

101B

Iq COMMAND
CALCULATING
UNIT

→ Iqr

101C

FREQUENCY
COMMAND
CALCULATING UNIT

→ Fr

# FIG. 5

## FIG. 6

Vcu1,2··N

Vcv1,2··N

Vcw1,2··N

103

AVERAGE
VALUE
CALCULATING
UNIT  103A

Vcave

103B

Vcr  —  VOLTAGE
CONTROLLER

Vdcr

DC VOLTAGE
COMMAND
VALUE

Vdc0

## FIG. 7

AMPLITUDE

DC VOLTAGE
COMMAND VALUE
Vdcr

AC VOLTAGE
COMMAND VALUE
Vacur          Vacvr          Vacwr

0

TIME

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015012769 A
- JP 5993675 B

- JP 2016197940 A
- EP 2560275 A1

**Non-patent literature cited in the description**

- Technical Trends in New-Type Voltage Source AC/DC Converters for Power Systems: with Special Focuses on Modular Multilevel Converter (MMC). The Institute of Electrical Engineers of Japan, April 2016, vol. 1374, 13-15